# EUROPÄISCHE PATENTSCHRIFT

(11) **EP 3 269 534 B1**
(45) Veröffentlichungstag und Bekanntmachung des Hinweises auf die Patenterteilung: **19.06.2019**
(21) Anmeldenummer: 16179503.4
(22) Anmeldetag: 14.07.2016
(51) Int. Cl.: B29C 65/20, B29K 101/12

(54) **VERFAHREN ZUM STOFFSCHLÜSSIGEN VERBINDEN VON SICH ZUMINDEST TEILWEISE ÜBERDECKENDEN MATERIALLAGEN SOWIE VERBINDUNGSAUTOMAT ZUR DURCHFÜHRUNG DES VERFAHRENS**
METHOD FOR JOINING BY WELDING OR GLUING AT LEAST PARTIALLY OVERLAPPING LAYERS OF MATERIAL AND AUTOMATIC JOINING MACHINE FOR CARRYING OUT THE METHOD
PROCEDE DE LIAISON PAR SOUDAGE OU COLLAGE DE COUCHES DE MATERIAU SE CHEVAUCHANT AU MOINS PARTIELLEMENT ET AUTOMATE DE LIAISON DESTINE A EXECUTER LE PROCEDE

(43) Veröffentlichungstag der Anmeldung: 17.01.2018
(73) Patentinhaber: Leister Technologies AG, 6056 Kägiswil (CH)
(72) Erfinder: Niederberger, Adolf, 6056 Kägiswil (CH); Lötscher, Roman, 6005 Luzern (CH); Horat-Fässler, Pascal, 6015 Luzern (CH)
(74) Vertreter: Klocke, Peter

(56) Entgegenhaltungen:
- DD-A1- 49 995
- DE-A1-102006 016 695
- GB-A- 882 740

## Beschreibung

Die Erfindung betrifft Verfahren zum thermisch induzierten stoffschlüssigen nahtförmigen Verbinden von schweiß- und/oder klebbaren flachen flexiblen Materiallagen miteinander, die als Materialbahn, Materialband und/oder Materialstück ausgebildet sind und sich zumindest teilweise überdeckend zueinander angeordnet werden, mittels eines Verbindungsautomaten, wobei mindestens eine an einem Tragerahmen des Verbindungsautomaten angeordnete elektrische Kontaktheizeinrichtung mit einem direkt elektrisch bestromten temperierbaren Heizkeil zum lokalen Erwärmen mindestens einer der zu verbindenden Materiallage auf eine Verbindungstemperatur und mindestens eine an dem Tragerahmen angeordnete elektromotorisch angetriebene Anpress- und Vorschubrolle zum lokalen Zusammenpressen eines erwärmten Materialbereiches der Materiallage benutzt wird, und wobei eine elektronische Steuerung für die Einstellung und/oder die Regelung der Relativgeschwindigkeit v zwischen den Materiallagen und dem Verbindungsautomaten und der Temperatur T und/oder der elektrischen Leistung P des zwischen zwei Elektroden des Heizkeils angeordneten Heizwiderstandes verwendet wird.

Die Erfindung betrifft außerdem einen Verbindungsautomaten zum thermisch induzierten stoffschlüssigen nahtförmigen Verbinden von schweiß- und/oder klebbaren flachen flexiblen Materiallagen miteinander, die als Materialbahn, Materialband und/oder Materialstück ausgebildet und sich zumindest teilweise überdeckend angeordnet sind, der zur Durchführung des vorstehend beschriebenen Verfahrens geeignet ist.

Es ist bekannt, Folien- und Dichtungsbahnen aus thermoplastischem Kunststoffmaterial und mit einem derartigen Material beschichtete Gewebe an sich überlappenden Rändern nach dem Heizkeilschweißverfahren miteinander stoffschlüssig zu verbinden, insbesondere fluiddicht miteinander zu verschweißen. Dabei wird der Heizkeil, mittels dem die zu verbindenden Kunststoffbahnen lokal plastifiziert werden, üblicherweise direkt oder indirekt elektrisch beheizt. Es ist außerdem bekannt, Materialstücke oder Materialbänder mit einer Materiallage stoffschlüssig zu verbinden, die aus thermoplastischen Material bestehen oder mit einem derartigen Material beschichtet sind. Es ist weiterhin üblich, die vorstehend aufgeführten Materiallage anstelle durch Schweißen durch Kleben im Heizkeilklebeverfahren miteinander stoffschlüssig zu verbinden. Dazu wird häufig auf eines der zu verbindenden Materiallage in dem vorgesehenen Verbindungsbereich eine thermisch aktivierbare Kleberschicht aufgebracht, die mittels des Heizkeils aufgeschmolzen wird.

Aus dem Stand der Technik sind eine Vielzahl von Verbindungsautomaten in Form von Schweißgeräten bzw. Schweißautomaten zur Durchführung des Heizkeilschweißverbindungsverfahrens bekannt. All diesen bekannten Vorrichtungen und den dabei angewandten Verfahren ist es gemein, dass die zu verschweißenden Materialien randseitig angehoben, deren einander zugewandten Oberflächen mittels des erhitzten Heizkeils plastifiziert und anschließend über Anpressrollen mit ausreichender Kraft zusammengepresst werden. Aus dem Stand der Technik sind auch eine Vielzahl von Klebegeräten bzw. Klebeautomaten zur Durchführung des Heizkeilklebeverbindungsverfahrens bekannt. Auch bei diesen bekannten Vorrichtungen und den dabei angewandten Verfahren ist es so, dass die zu verbindenden beispielsweise lokal mit Schmelzkleber beschichteten Materiallage mittels des Heizkeils erhitzt werden, bis der Kleber plastifiziert wird, und anschließend über Anpressrollen mit ausreichender Kraft zusammengepresst werden.

Derartige Schweiß- oder Klebenähte müssen über lange Zeit dicht sein und/oder eine ausreichende Festigkeit besitzen. Die Qualität der beim Heizkeilverbindungsverfahren hergestellten Verbindungsnähte ist bekanntlich stark abhängig von den verwendeten Prozessparametern. Für eine sichere stoffschlüssige Verbindung kommt es insbesondere auf die Geschwindigkeit an, mit der der Heizkeil entlang den Materiallagen geführt wird, auf die Temperatur des Heizkeils, der die zu verbindenden Materialbereiche temperaturbeaufschlagt und auf den von den Anpressrollen auf die verbindenden Materialbereiche ausgeübten Anpressdruck. Diese wichtigen Prozessparameter werden bei automatisierten Verbindungsverfahren gewöhnlich automatisch überwacht und geregelt. Dazu sind dann Einrichtungen zur Erfassung der Temperatur des Heizkeils, der Schweißgeschwindigkeit und des Anpressdruckes vorgesehen, die die Anzeige dieser Parameter sowie die Einstellung bzw. Veränderung dieser Parameter mittels einer integrierten Gerätesteuerung ermöglichen.

Zum Stand der Technik betreffend Verfahren und Vorrichtungen zum Verbinden von Materiallagen nach dem Heizkeilverbindungsverfahrens wird beispielhaft auf die Offenlegungsschrift EP 1 464 471 A1 verwiesen. Des Weiteren sind verschiedenartige Heizkeile zur Durchführung des Heizkeilverbindungsverfahrens beispielsweise aus den Druckschriften US 2,870,308 A, DD 49 995 A1 und DE 10 2006 016 695 A1 bekannt.

Dokument DD 49 995 A1 offenbart ein Verfahren zum thermisch induzierten stoffschlüssigen nahtförmigen Verbinden von schweiß- und/oder klebbaren flachen flexiblen Materiallagen miteinander, die als Materialbahn, Materialband und/oder Materialstück ausgebildet sind und sich zumindest teilweise überdeckend zueinander angeordnet werden, wobei mindestens eine elektrische Kontaktheizeinrichtung mit einem direkt elektrisch bestromten temperierbaren Heizkeil zum lokalen Erwärmen mindestens einer der zu verbindenden Materiallage auf eine Verbindungstemperatur und mindestens eine elektromotorisch angetriebene Anpress- und Vorschubrolle zum lokalen Zusammenpressen eines erwärmten Materialbereiches der Materiallage benutzt wird, und wobei eine Steuerung für die Einstellung und/oder die Regelung der Geschwindigkeit und der Temperatur des zwischen zwei Elektroden des Heizkeils angeordneten Heizwiderstandes verwendet wird, wobei während des Verbindungsvorgangs die Temperatur des Heizkeils zumindest in vorgegebenen Zeitabständen überwacht wird.

Dokument DD 49 995 A1 offenbart ebenfalls eine Verbindungsvorrichtung zum thermisch induzierten stoffschlüssigen nahtförmigen Verbinden von schweiß- und/oder klebbaren flachen flexiblen Materiallagen miteinander, die als Materialbahn, Materialband und/ oder Materialstück ausgebildet und sich zumindest teilweise überdeckend angeordnet sind, mit mindestens einer elektrischen Kontaktheizeinrichtung mit einem direkt elektrisch bestromten temperierbaren Heizkeil zum lokalen Erwärmen mindestens einer der zu verbindenden Materiallagen auf eine Verbindungstemperatur und mit mindestens einer elektromotorisch angetriebenen Anpress- und Vorschubrolle zum lokalen Zusammenpressen eines erwärmten Materialbereiches der Materiallagen, wobei eine Steuerung für die Einstellung und/oder der Regelung der Geschwindigkeit und der Temperatur des zwischen zwei Elektroden des Heizkeils angeordneten Heizwiderstandes vorgesehen ist.

Dokument GB 882 740 A offenbart ein Verfahren, wobei während eines Verbindungsvorgangs eine Relativgeschwindigkeit und die elektrische Leistung eines Heizelements zumindest in vorgegebenen Zeitabständen überwacht wird und bei einer festgestellten Änderung der Relativgeschwindigkeit die elektrische Leistung des Heizelements in Abhängigkeit von der ermittelten Relativgeschwindigkeit automatisch neu eingestellt wird, wobei bei einer Zunahme der Relativgeschwindigkeit dessen elektrische Leistung erhöht und bei einer Abnahme der Relativgeschwindigkeit dessen elektrische Leistung erniedrigt wird.

Als nachteilig wird bei bekannten Heizkeilverbindungsautomaten und den damit durchführbaren Verbindungsverfahren angesehen, dass die verwendeten Heizkeile eine relativ große Masse aufweisen, die ein schnelles Aufwärmen und Abkühlen des Heizkeils bei nötigen Anpassung der Temperatur bzw. der Leistung des Heizkeils während des Schweißprozesses verhindern, die beispielsweise aufgrund von vor-kommenden Geschwindigkeitsänderungen beim Schweißen erforderlich sind, um eine gleichbleibende Schweißqualität sicherzustellen.

Davon ausgehend liegt der Erfindung die Aufgabe zugrunde, eine Möglichkeit vorzuschlagen, bei welcher der direkt bestromte Heizkeil schnell auf elektrische Leistungsanpassungen reagiert, die durch Änderungen der Relativgeschwindigkeit zwischen den Kunststoffmaterialien und dem Verbindungsautomaten ausgelöst werden.

Diese Aufgabe wird erfindungsgemäß durch ein Verfahren mit den Merkmalen des unabhängigen Patentanspruchs 1 gelöst. Weiterhin wird diese Aufgabe durch einen Verbindungsautomaten mit den Merkmalen des nebengeordneten Patentanspruchs 11 gelöst. Weitere vorteilhafte Ausführungsformen der Erfindung sind den jeweils rückbezogenen Patentansprüchen zu entnehmen.

Danach wird bei dem erfindungsgemäßen Verfahren zum thermisch induzierten stoffschlüssigen nahtförmigen Verbinden von schweiß- und/oder klebbaren flachen flexiblen Materiallagen miteinander, die als Materialbahn, Materialband und/oder Materialstück ausgebildet sind und sich zumindest teilweise überdeckend angeordnet werden, während des Verbindungsvorgangs die Relativgeschwindigkeit v zwischen den Materiallagen und dem Verbindungsautomat sowie die Temperatur und/oder die elektrische Leistung des Heizkeils zumindest in vorgegebenen Zeitabständen überwacht, wobei bei einer festgestellten Änderung der Relativgeschwindigkeit v die elektrische Leistung P des Heizkeils in Abhängigkeit von der ermittelten Relativgeschwindigkeit v automatisch neu eingestellt wird. Dabei wird bei einer Zunahme der Relativgeschwindigkeit v die elektrische Leistung des Heizkeils erhöht und bei einer Abnahme der Relativgeschwindigkeit v dessen elektrische Leistung erniedrigt, und zwar so, dass entweder die Temperatur des Heizkeils oder die von dem Heizkeil auf die Verbindungsbereiche der Materiallage übertragene Wärmeenergie unabhängig von der Relativgeschwindigkeit v konstant bleibt. Dieses Verfahren kann sowohl bei einem fahrbaren als auch bei einem stationären Verbindungsautomaten angewandt werden, wobei primär die von dem Heizkeil auf die Verbindungsbereiche der Materiallage übertragene Wärmeenergie und nicht die Temperatur des Heizkeils konstant gehalten wird. Unter Relativgeschwindigkeit v wird in diesem Zusammenhang die Geschwindigkeit verstanden, mit der sich ein fahrbarer Verbindungsautomat gegenüber den Materiallagen bewegt bzw. mit der sich die Materiallagen gegenüber einem stationären Verbindungsautomaten bewegen.

Bei einer bevorzugten Ausführungsform des erfindungsgemäßen Verfahrens wird die von dem Heizkeil an die zu verbindenden Materiallagen übertragene Wärmeenergie unabhängig von der Relativgeschwindigkeit v konstant gehalten. Dies bedeutet insbesondere, dass bei jeder Relativgeschwindigkeit die gleiche Wärmeenergie von dem Heizkeil auf die Verbindungsbereiche der Materiallagen übertragen wird. Dies hat zur Folge, dass die Plastifizierung der Materiallagen oder der Kleberschicht der Materiallagen gleichbleibend erfolgt. Um dies zu erreichen, wird die elektrische Leistung P des Heizwiderstandes in Abhängigkeit von der Relativgeschwindigkeit v zwischen den Materiallagen und dem Verbindungsautomaten gewählt, d.h. bei Änderungen der Relativgeschwindigkeit v jeweils neu eingestellt, wobei die elektrische Leistung P erhöht wird, wenn eine Erhöhung der Relativgeschwindigkeit v vorliegt, und die elektrische Leistung P reduziert wird, wenn eine Erniedrigung der Relativgeschwindigkeit v vorliegt.

Vorzugsweise wird die elektrische Leistung P des Heizwiderstandes des Heizkeils von der elektronischen Steuerung geregelt und dabei ein Ist-Wert P_{I} der Leistung P bezüglich einem Soll-Wert P_{S} der Leistung P konstant gehalten, wobei der Benutzer vorzugsweise mindestens den Sollwert P_{S} der Leistung P vorgeben kann. Dazu wird fortlaufend, zumindest in vorgegebenen Zeitabständen, während des Verbindungsvorgangs die Relativgeschwindigkeit v und die elektrische Leistung des Heizkeils automatisch bestimmt. Bei Abweichungen des Ist-Wert P_{I} vom Soll-Wert P_{S} bei der ermittelten Relativgeschwindigkeit v werden die Differenzen unmittelbar selbstständig von der elektronischen Steuerung ausgeglichen.

Bei einer begünstigten Ausführungsform der Erfindung wird die elektrische Leistung P_{I} des Heizwiderstandes über eine Messung des Spannungsabfalls an den Elektroden des Heizkeils und die Messung des Stromes durch den Heizwiderstand des Heizkeils ermittelt. Dies ermöglicht in einfacher Weise eine exakte Bestimmung der momentanen Leistung P des Heizwiderstandes. Damit können auch geringe Differenzen zwischen dem festgestellten Ist-Wert P_{I} und dem vorgegebenen Soll-Wert P_{S} zuverlässig erkannt werden.

Bei einer Ausführungsform des erfindungsgemäßen Verfahrens wird der Soll-Wert P_{S} der Leistung P intern von der elektronischen Steuerung in einen für den Schweiß- bzw. Klebevorgang nutzbaren Soll-Wertanteil P_{Sn} und in einen für den Schweiß- bzw. Klebevorgang nicht nutzbaren Soll-Wertanteil P_{Sv} aufgeteilt. Die Leistungsverluste P_{Sv} sind abhängig von der Keil- und Keilanbindungsgeometrie.

Zweckmäßigerweise wird bei einer Ausführungsform des erfindungsgemäßen Verfahrens der Soll-Wertanteil P_{Sn} intern von der elektronischen Steuerung aus einem Soll-Wert ED_{Sn} der Energiedichte des Heizkeils, der Relativgeschwindigkeit v des Heizkeils gegenüber den Materiallagen und der Breite B des Heizkeils bestimmt, wobei der Soll-Wertanteil P_{Sn} sich als Produkt des Soll-Wertes ED_{Sn} der Energiedichte des Heizkeils, der Relativgeschwindigkeit v und der Breite B ergibt.

Durch das Konstanthalten der Energiedichte ist eine besonders gleichbleibende Qualität der Schweiß- oder Klebeverbindung möglich. Die Energiedichte ist ein Maß für die auf ein Material übertragene Energie und damit auch ein Maß für die Temperatur des Materials nach der Energieübertragung. Für jedes Material existiert eine optimale Energiedichte, welche zur bestmöglichen Nahtqualität führt. Mit der Energiedichte ED_{Sn} und dem nicht nutzbaren Soll-Wertanteil Psv werden sowohl die Materialeigenschaften der zu verschweißenden und/oder zu verklebenden Materiallagen wie auch die speziellen Eigenschaften des verwendeten Heizkeils bzw. des Klebers berücksichtigt.

Die elektronische Steuerung bestimmt die elektrische Leistung der Kontaktheizeinrichtung über die Messung des Spannungsabfalles über die Heizeinrichtung und über den elektrischen Strom durch diese Heizeinrichtung. Die Relativgeschwindigkeit v, d.h. die Verbindungsgeschwindigkeit wird beispielsweise über die Drehzahl des Antriebsaggregats für die mindestens eine elektromotorisch angetriebene Anpress- und Vorschubrolle bestimmt und die Breite der Heizeinrichtung wird vom Bediener festgestellt und in die elektrische Steuerung eingegeben.

Es hat sich zudem als besonders günstig erwiesen, dass bei einer Ausführungsform des erfindungsgemäßen Verfahrens zumindest der Soll-Wert P_{S} der Leistung P des Heizkeils, der nicht nutzbare Soll-Wertanteil P_{Sv} der Leistung P des Heizkeils und/oder der Soll-Wert ED_{Sn} der Energiedichte von dem Benutzer des Verbindungsautomaten vorgegeben wird. Damit kann die Leistung des Heizkeils an unterschiedliche Materialien und/oder Dicken der miteinander zu verbindenden Materiallagen und an unterschiedliche Keil- und Keilanbindungsgeometrien angepasst, insbesondere vor dem Schweiß- oder Klebevorgang geeignet eingestellt werden.

Vorteilhafterweise wird bei einer Ausführungsform des vorstehend aufgeführten Verfahrens zumindest bei einer Vorerwärmung des Heizwiderstandes vor dem eigentlichen Verbindungsvorgang die Temperatur des Heizkeils durch die elektronische Steuerung eingestellt und/oder geregelt. Zur Bestimmung der Temperatur des Heizkeils wird dabei insbesondere der temperaturabhängige elektrische Widerstand des Heizwiderstandes gemessen. Vorzugsweise wird dazu der elektrische Widerstand des Heizwiderstandes über eine Messung des Spannungsabfalles an den Elektroden und die Messung des Stromes durch den Heizwiderstand ermittelt. Damit kann die aktuelle Temperatur des Heizwiderstandes gemessen und bei Bedarf geändert werden.

Die elektronische Steuerung bestimmt den temperaturabhängigen, elektrischen Widerstandes R des direkt elektrisch bestromten temperierbaren Heizkeils, und regelt den temperaturabhängigen elektrischen Widerstandes R und hält somit den Wert R bzgl. eines Soll-Wertes R_{S} konstant. Diese Art der Regelung wird vorzugsweise nur für die Vorwärmung verwendet, d.h. für wenige Sekunden vor dem eigentlichen Schweiß- oder Klebevorgang. Die ermittelten Widerstandswerte können optional auch in einen Temperaturwert umgerechnet werden, und zwar unter Verwendung einer zuvor aufgenommenen Widerstands-Temperatur-Kennlinie.

Der erfindungsgemäße Verbindungsautomat zum thermisch induzierten stoffschlüssigen nahtförmigen Verbinden von schweiß- und/oder klebbaren flachen flexiblen Materiallagen miteinander, die als Materialbahn, Materialband und/oder Materialstück ausgebildet und sich zumindest teilweise überdeckend angeordnet sind, im Heizkeilschweiß- oder Heizkeilklebeverfahren, weist eine elektronische Steuerung auf, die zur Durchführung des vorstehend beschriebenen Verfahrens ausgebildet ist. Sie weist zudem entsprechend dem Stand der Technik mindestens eine an einem Tragerahmen des Verbindungsautomaten angeordnete elektrische Heizeinrichtung mit einem direkt elektrisch bestromten Heizkeil zum randseitigen Anschmelzen mindestens einer der Materiallagen und/oder zum Aufschmelzen einer Klebers, der mindestens an einer der Materiallagen angeordnet ist, auf und zudem mindestens eine an dem Tragerahmen angeordnete elektromotorisch angetriebene Anpress- und Vorschubrolle zum Zusammenpressen der zu verbindenden Materiallagen nach dem lokalen Erhitzen in den vorgesehenen Verbindungsbereichen. Die elektronische Steuerung ist für die Einstellung und/oder die Regelung der Relativgeschwindigkeit v zwischen den Materiallagen und dem Verbindungsautomaten und für die Einstellung und/oder die Regelung der Temperatur T und/oder der elektrischen Leistung P des zwischen zwei Elektroden des Heizkeils angeordneten Heizwiderstandes vorgesehen. Dabei ist der Heizwiderstand von einem gefalteten Stahlblechzuschnitt gebildet, dessen Knickstelle eine Heizkeilspitze bildet und dessen parallel zu der Knickstelle verlaufenden Ränder an den Elektroden befestigt sind. Bei dem erfindungsgemäßen Verbindungsautomaten kann es sich um einen selbstfahrenden Automaten handeln, der sich relativ zu den Materiallagen bewegt oder um einen stationären Verbindungsautomaten, bei dem die Materiallagen relativ zu dem Verbindungsautomaten bewegt werden.

Vorzugsweise weist der Stahlblechzuschnitt mäanderförmig geschnittene Windungen auf, die sich zwischen den Elektroden erstrecken. Die mäanderartigen Windungen bestimmen die wirksame Länge und Breite des Heizwiderstandes. Die Geometrie der Windungen des Stahlblechzuschnittes wie auch das Material, aus dem der Stahlblechzuschnitt hergestellt ist, bestimmen den Kaltwiderstand und den Warmwiderstand des Heizwiderstandes.

Um schnelle Reaktionszeiten des Heizwiderstandes zu ermöglichen, weist der Stahlblechzuschnitt eine geringe Masse auf. Dies wird insbesondere dadurch erreicht, dass dessen Dicke zwischen 0,1 mm und 1,0 mm beträgt und/oder die maximale Masse des Heizwiderstandes 50 g nicht überschreitet.

Bei einer begünstigten Ausführungsform des erfindungsgemäßen Verbindungsautomaten ist der Heizwiderstand zumindest in einem vorderen, zu der mindestens einen Anpress- und Vorschubrolle weisenden Bereich, vorzugsweise beidseitig, konkav ausgebildet. Er weist in diesem Bereich insbesondere die gleichen Krümmungsradien wie die mindestens eine Anpress- und Vorschubrolle auf. Dies ermöglicht, dass die an dem Heizkeil vorbeigeführten Materiallagen vor dem Zusammenpressen mittels der Anpress- und Vorschubrolle durch den Außenumfang der Anpress- und Vorschubrolle an den Heizwiderstand in Anlage gehalten werden, was wiederum die Erwärmung der Materiallagen begünstigt.

Bei einer bevorzugten Ausführungsform des erfindungsgemäßen Verbindungsautomaten, der als Schweiß- oder Klebeautomat ausgebildet ist, sind Einrichtungen vorgesehen, die die Kontaktheizeinrichtung mit einer einstellbaren Kraft gegen die mindestens eine Anpress- und Vorschubrolle drücken. Damit werden die zu verbindenden Bereiche der zu verschweißenden oder zu verklebenden Materiallagen zwischen dem Heizkeil und der mindestens einen Anpress- und Vorschubrolle geklemmt und damit an den Heizkeil angepresst, was wiederum die Erwärmung der Materiallagen begünstigt.

Der verwendete Heizkeil wird im Sicherheitskleinspannungsbereich (SELV) betrieben und je nach zu erfüllender Norm mit maximal 30 - 50 V direkt bestromt.

Das vorgestellte erfindungsgemäße Verfahren zum stoffschlüssigen nahtförmigen Verbinden von verschweiß- oder verklebbaren Materiallagen im Heizkeilverbindungsverfahren bringt den Vorteil mit sich, dass die Verbindungsgeschwindigkeit während des Verbindungsvorgangs verändert, d.h. beliebig vergrößert oder verkleinert werden kann, ohne dass die Qualität der erzeugten Schweiß- oder Klebenähte darunter leidet. Dies wird dadurch erreicht, dass bei Änderungen der Relativgeschwindigkeit zwischen den zu verbindenden Materiallagen und der Kontaktheizeinrichtung auch die elektrische Leistung des Heizwiderstandes automatisch über die Steuerelektronik des Verbindungsautomaten angepasst wird, wobei die Steuerelektronik die elektrische Leistung des Heizwiderstandes so verändert, dass die auf das Material übertragene Wärmeenergie unabhängig von der Relativgeschwindigkeit, d.h. von der Schweiß- oder Klebegeschwindigkeit konstant bleibt. Die Erfindung bietet zudem sowohl für den Anwender, Kunden wie auch für den Hersteller eine Vielzahl von Vorteilen. Der Heizkeil bietet zum Beispiel schnelle Reaktionszeiten bei Leistungsänderungen, bedingt durch seine geringe Masse und ermöglicht damit ein schnelles Aufwärmen und Abkühlen und somit Leistungs- bzw. Geschwindigkeitsanpassung während des Verbindungsvorganges. Der Heizkeil ermöglicht außerdem hohe Oberflächentemperaturen und ist damit insbesondere geeignet zum stoffschlüssigen Verbinden von beschichteten Materialien und mit höheren Geschwindigkeiten. Der Heizkeil ist kostengünstig herstellbar, was wiederum beim Ersatz zu geringeren Betriebskosten führt. Außerdem ist keine Thermosonde zur Erfassung der Heizkeiltemperatur notwendig, die verschleiß- und korrosionsanfällig ist. Weiterer Vorteil ist die automatische Anpassung der Heizleistung an die Geschwindigkeit, über die Regelung der Energiedichte, was die Güte der Verbindungsnaht positiv beeinflusst. Außerdem besteht durch die verwendete Sicherheitskleinspannung für den Heizkeil keine Gefahr bei der Berührung. Zudem kühlt der Heizkeil bei Abschaltung der Betriebsspannung schnell ab, so dass im Stand-by Betrieb ungewolltes Berühren des Heizkeils nicht zu Verbrennungen führt.

Der erfindungsgemäße Verbindungsautomat kann beispielsweise zum randseitigen Verbinden von Kunststoffbahnen oder -folien, zum Einsäumen von Werbebanner oder LKW-Planen und zum Aufsetzen von flickenförmigen Verstärkungen auf derartigen Materiallagen verwendet werden. Eine weitere Anwendung ist das sog. 3D-Schweissen bzw. 3D-Kleben, bei welcher Zuschnitte von Kunststofffolien und -planen längs ihren Rändern stoffschlüssig mit einer Materialgrundbahn verbunden werden. So werden z.B. Gummiboote oder Sportjacken geschweisst, ähnlich wie mit einer Nähmaschine. Eine weitere Anwendung ist das Anbringen von Bändern an einer Materiallage, d.h. Verbinden von sogenannten Tapes mit einem beliebigen Grundmaterial, durch direktes Aufschweißen oder Aufkleben mittels thermisch aktivierbarer Klebers, wie beispielsweise das Anbringen von Tapes zur Nahtabdichtung von genähten Nähten bei Sportbekleidung.

Nachfolgend wird die Erfindung anhand von zwei in der Zeichnung dargestellten Ausführungsbeispielen näher erläutert. Weitere Merkmale der Erfindung ergeben sich aus der folgenden Beschreibung des Ausführungsbeispiels der Erfindung in Verbindung mit den Ansprüchen und der beigefügten Zeichnung. Die einzelnen Merkmale der Erfindung können für sich allein oder zu mehreren bei unterschiedlichen Ausführungsformen der Erfindung verwirklicht sein. Es zeigen:
- Figur 1: Einen erfindungsgemäßen mobilen selbstfahrenden Verbindungsautomaten in schematischer perspektivischer Darstellung;
- Figur 2: einen erfindungsgemäßen stationären Verbindungsautomaten in schematischer perspektivischer Darstellung; und
- Figur 3: den Heizkeil aus Figur 1 bzw. 2 in vergrößerter schematischer Darstellung, in Seitenansicht (Figur 3a) und in Frontansicht (Figur 3b).

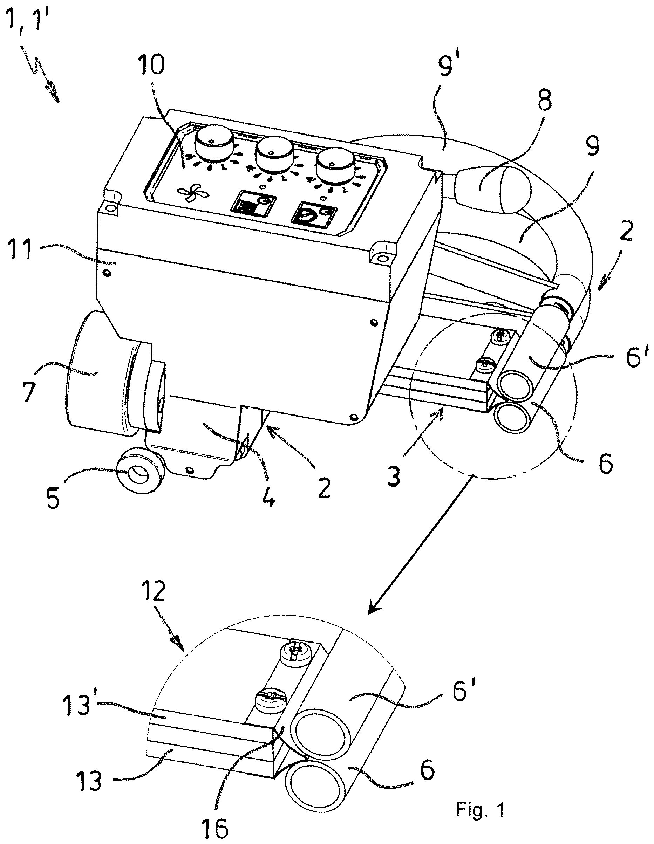

Die Figur 1 zeigt ein Ausführungsbeispiel eines erfindungsgemäßen Verbindungsautomaten 1, der als mobiler selbstfahrender Schweißautomat 1' zum randseitigen überlappenden Verschweißen von in der Zeichnung nicht dargestellten thermoplastischen Kunststoffbahnen ausgebildet ist. Der Schweißautomat 1' weist ein Fahrgestell 2 mit einer daran angeordneten Kontaktheizeinrichtung 3 zum randseitigen Anschmelzen der Kunststoffbahnen auf, wobei das Fahrgestell 2 einen Tragerahmen 4 besitzt, an dem mehrere voneinander beabstandete Laufrollen 5 und zwei einander gegenüberliegende Anpress- und Vorschubrollen 6, 6' angeordnet sind. Die untere Anpress- und Vorschubrolle 6 ist ortsfest und die andere obere Anpress- und Vorschubrolle 6' schwenkbar gelagert. Der Schweißautomat 1' weist zudem eine in der Figur nur teilweise sichtbare Antriebseinrichtung 7 für die Anpress- und Vorschubrollen 6, 6' auf. Die Laufrollen 5 sind zum Abstützen auf einem Untergrund, die Antriebs- und Vorschubrollen 6, 6' zum Durchführen eines Randes der sich überlappenden Kunststoffbahnen und die Antriebseinrichtung 7 zum Antrieb der Anpress- und Vorschubrollen 6, 6' vorgesehen.

An dem Tragerahmen 4 ist außerdem eine Spannvorrichtung 8 zum Andrücken der oberen Anpress- und Vorschubrolle 6' an die untere Vorschubrolle 6 angeordnet. Die untere Anpress- und Vorschubrolle 6 ist an einem unteren Längsausleger 9 angeordnet, der starr mit dem Tragerahmen 4 verbunden ist. Im Unterschied dazu ist die obere Anpress- und Vorschubrolle 6' an einem oberen Längsausleger 9' angeordnet, der schwenkbar an dem Tragerahmen 4 befestigt und in bzw. entgegen der Richtung des unteren Längsauslegers 9 schwenkbar ist. Die Spannvorrichtung 8 kraftbeaufschlagt den oberen Längsausleger 9' und drückt diesen in Richtung des unteren Längsauslegers 9, bis die beiden Anpress- und Vorschubrollen 6, 6' in Anlage aneinander sind.

Der Schweißautomat 1' weist außerdem eine elektronische Steuerung 10 auf, die in einem von dem Tragerahmen 4 getragenen Gehäuse 11 angeordnet ist. Die elektronische Steuerung 10 ist für die Einstellung und/oder die Regelung der Relativgeschwindigkeit v zwischen den Kunststoffbahnen und dem Schweißautomaten 1' sowie für die Einstellung und/oder Regelung der Temperatur T und/oder der elektrischen Leistung P der Kontaktheizeinrichtung 3 vorgesehen.

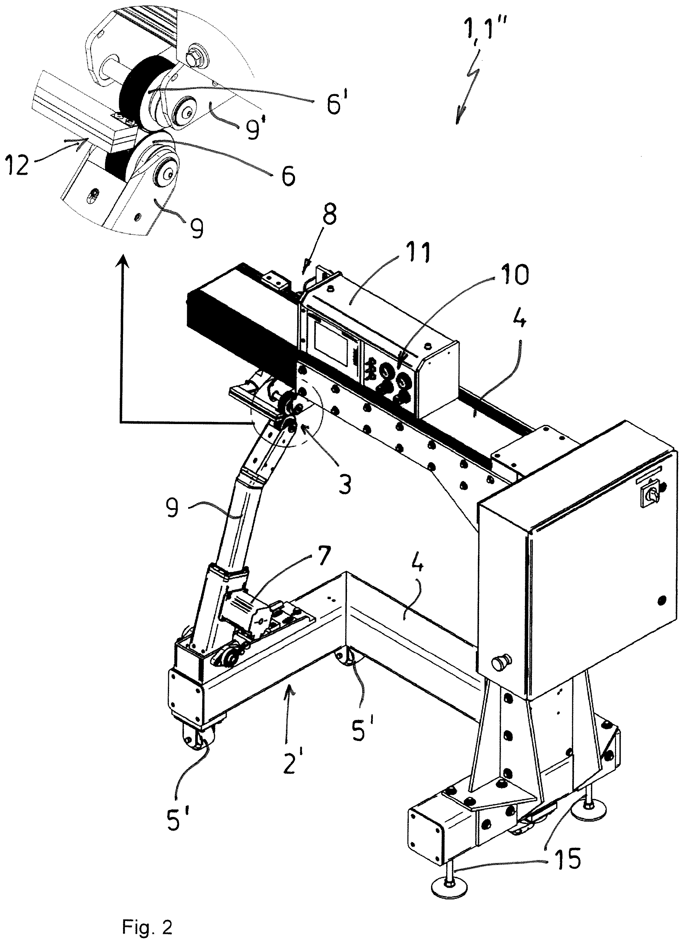

Die Figur 2 zeigt ein Ausführungsbeispiel eines erfindungsgemäßen Verbindungsautomaten 1, der als stationärer Schweißautomat 1" zum thermisch induzierten stoffschlüssigen nahtförmigen Verbinden von in der Zeichnung nicht dargestellten Materiallagen ausgebildet ist. Der Schweißautomat 1" weist ein Standgestell 2' mit einer daran angeordneten Kontaktheizeinrichtung 3 zum Aufheizen, Anschmelzen und/oder Aufschmelzen mindestens einer der beiden miteinander zu verbindenden Materiallagen in einem Verbindungsbereich auf, der vorzugsweise randnah angeordnet ist, wobei das Standgestell 2' einen Tragerahmen 4 besitzt, an dem unten zwei Transportrollen 5' und zwei Standfüße 15 und zwei einander gegenüberliegende Anpress- und Vorschubrollen 6, 6' angeordnet sind, die sich in Anlage aneinander befinden, von denen eine ortsfest und die andere gegenüber dieser bewegbar gelagert ist. Die Transportrollen 5' erleichtern den Transport des Schweißautomaten 1" zu seinem Aufstellungsort und. Sie tragen den Tragerahmen 4 beim Betrieb des Schweißautomaten 1" zusammen mit den Standfüßen 15, die zum Abstützen auf einem Untergrund bestimmt sind. Die Antriebs- und Vorschubrollen 6, 6' sind zum Durchführen des Verbindungsbereiches der sich überdeckenden Materiallagen und die Antriebseinrichtung zum Antrieb der Anpress- und Vorschubrollen 6, 6' vorgesehen. Der Schweißautomat 1" weist zudem eine Antriebseinrichtung 7 für die Anpress- und Vorschubrollen 6, 6' auf.

An dem Tragerahmen 4 ist außerdem eine in der Zeichnung nicht dargestellte Spannvorrichtung 8 zum Aneinanderdrücken der oberen und der unteren Anpress- und Vorschubrolle 6' 6' angeordnet. Die untere Anpress- und Vorschubrolle 6 ist an einem sich aufwärts erstreckenden Ausleger 9 angeordnet, der starr mit dem Tragerahmen 4 verbunden ist. Im Unterschied dazu ist die obere Anpress- und Vorschubrolle 6' an einem oberen sich abwärts ersteckenden Ausleger 9' angeordnet, der beweglich an dem Tragerahmen 4 befestigt. Der obere Ausleger 9' ist in bzw. entgegen der Richtung des unteren Auslegers 9 schwenk und/oder verschiebbar. Die Spannvorrichtung 8 kraftbeaufschlagt den oberen Ausleger 9' und drückt diesen in Richtung des unteren Auslegers 9, bis die beiden Anpress- und Vorschubrollen 6, 6' in Anlage aneinander sind.

Der Schweißautomat 1" weist außerdem eine elektronische Steuerung 10 auf, die in einem von dem Tragerahmen 4 getragenen Gehäuse 11 angeordnet ist. Die elektronische Steuerung 10 ist für die Einstellung und/oder die Regelung der Relativgeschwindigkeit v zwischen den Kunststoffbahnen und dem Schweißautomaten 1' sowie für die Einstellung und/oder Regelung der Temperatur T und/oder der elektrischen Leistung P der Kontaktheizeinrichtung 3 vorgesehen.

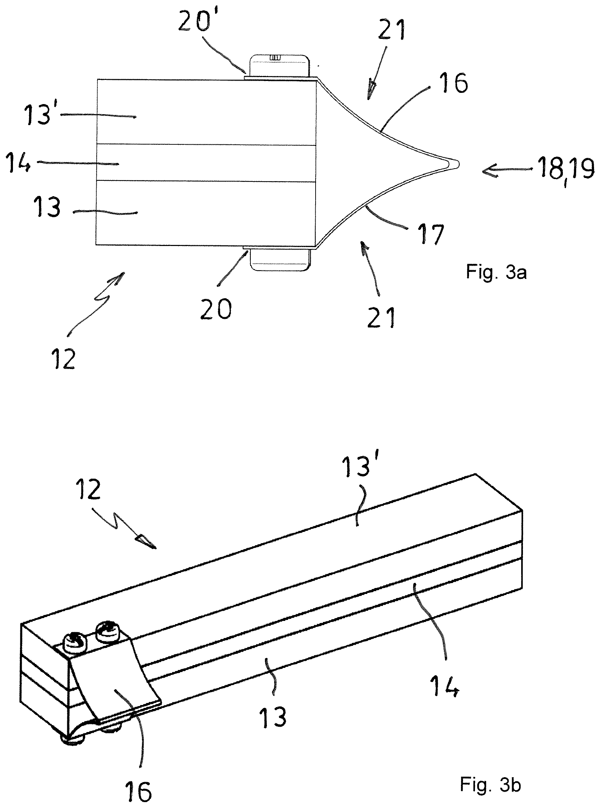

Die Figur 3 zeigt die Kontaktheizeinrichtung 3 aus Figur 1, 2 von der Seite und von vorne. Die Kontaktheizeinrichtung 3 weist einen direkt elektrisch bestromten temperierbaren Heizkeil 12 zum Aufheizen, Anschmelzen oder Aufschmelzen der Oberfläche mindestens einer der beiden miteinander zu verschweißenden oder zu verklebenden Materiallagen, sowie zwei Elektroden 13, 13', mittels denen der Heizkeil 12 vorzugsweise beweglich an dem Tragerahmen 4 befestigt ist. Von den beiden Elektroden 13, 13', die in dem dargestellten Ausführungsbeispiel über ein Isolierstück 14 miteinander verschraubt sind, führen Litzenleitungen zu der elektronischen Steuerung 10.

Gemäß der Figur 3a weist der Heizkeil 12 einen Heizwiderstand 16 auf, der mit den beiden Elektroden 13, 13' mechanisch und elektrisch leitend verbunden ist. Der Heizwiderstand 16 ist von einem gefalteten Stahlblechzuschnitt 17 gebildet, dessen mittlere Knickstelle 18 eine Heizkeilspitze 19 bildet und dessen Außenränder 20, 20' an den Elektroden 13, 13' befestigt sind. Der Stahlblechzuschnitt 17 weist eine typische Dicke zwischen 0,1 und 1,0 mm auf und vorzugsweise eine maximale Masse von 50 g. Der Heizwiderstand 16 ist in einem vorderen, der Heizkeilspitze 19 nahen Bereich 21, konkav geformt. Er weist in dem Bereich 21 die gleichen Krümmungsradien wie die beiden Anpress- und Vorschubrollen 6, 6' auf. Die Kontaktheizeinrichtung 3 kann mittels einer einstellbaren Kraft, die von einer in den Figuren nicht dargestellten Krafteinrichtung ausgeht, gegen die beiden Anpress- und Vorschubrollen 6, 6' gedrückt werden.

## Patentansprüche

1. Verfahren zum thermisch induzierten stoffschlüssigen nahtförmigen Verbinden von schweiß- und/oder klebbaren flachen flexiblen Materiallagen miteinander, die als Materialbahn, Materialband und/oder Materialstück ausgebildet sind und sich zumindest teilweise überdeckend zueinander angeordnet werden, mittels eines Verbindungsautomaten (1), wobei mindestens eine an einem Tragerahmen (4) des Verbindungsautomaten (1) angeordnete elektrische Kontaktheizeinrichtung (3) mit einem direkt elektrisch bestromten temperierbaren Heizkeil (12) zum lokalen Erwärmen mindestens einer der zu verbindenden Materiallage auf eine Verbindungstemperatur und mindestens eine an dem Tragerahmen (4) angeordnete elektromotorisch angetriebene Anpress- und Vorschubrolle (6, 6') zum lokalen Zusammenpressen eines erwärmten Materialbereiches der Materiallage benutzt wird, und wobei eine elektronische Steuerung (10) für die Einstellung und/oder die Regelung der Relativgeschwindigkeit v zwischen den Materiallagen und dem Verbindungsautomaten (1) und der Temperatur T und/oder der elektrischen Leistung P des zwischen zwei Elektroden (13, 13') des Heizkeils (12) angeordneten Heizwiderstandes (16) verwendet wird, wobei während des Verbindungsvorgangs die Relativgeschwindigkeit v und die Temperatur T und/oder die elektrische Leistung P des Heizkeils (12) zumindest in vorgegebenen Zeitabständen überwacht wird und bei einer festgestellten Änderung der Relativgeschwindigkeit v die elektrische Leistung P des Heizkeils (12) in Abhängigkeit von der ermittelten Relativgeschwindigkeit v automatisch neu eingestellt wird, wobei bei einer Zunahme der Relativgeschwindigkeit v dessen elektrische Leistung P erhöht und bei einer Abnahme der Relativgeschwindigkeit v dessen elektrische Leistung P erniedrigt wird.

2. Verfahren nach Anspruch 1, **dadurch gekennzeichnet, dass** unabhängig von der Relativgeschwindigkeit v die von dem Heizkeil (12) an die zu verbindenden Materiallage übertragene Wärmeenergie konstant gehalten wird.

3. Verfahren nach Anspruch 1 oder 2, **dadurch gekennzeichnet, dass** die elektrische Leistung P des Heizwiderstandes (16) von der elektronischen Steuerung (10) geregelt und ein Ist-Wert P_{I} der Leistung P bezüglich einem Soll-Wert P_{S} der Leistung P konstant gehalten wird.

4. Verfahren nach Anspruch 3 **dadurch gekennzeichnet, dass** die elektrische Leistung P_{I} des Heizwiderstandes (16) über eine Messung des Spannungsabfalles an den Elektroden (13, 13') des Heizkeils (12) und die Messung des Stromes durch den Heizwiderstand (16) des Heizkeils ermittelt wird.

5. Verfahren nach einem der vorstehenden Ansprüche 3 bis 4, **dadurch gekennzeichnet, dass** der Soll-Wert P_{S} der Leistung P intern von der elektronischen Steuerung (10) in einen für den Verbindungsvorgang nutzbaren Soll-Wertanteil P_{Sn} und einen für den Verbindungsvorgang nicht nutzbaren Soll-Wertanteil P_{Sv} aufteilt wird.

6. Verfahren nach einem der vorstehenden Ansprüche 3 bis 5, **dadurch gekennzeichnet, dass** der Soll-Wertanteil P_{Sn} intern von der elektronischen Steuerung (10) aus einem Soll-Wert ED_{Sn} der Energiedichte des Heizkeils (12), der Relativgeschwindigkeit v und der Breite B des Heizkeils (12) bestimmt wird, wobei der Soll-Wertanteil P_{Sn} sich als Produkt von ED_{Sn}, v und B ergibt.

7. Verfahren nach einem der vorstehenden Ansprüche 3 bis 6, **dadurch gekennzeichnet, dass** zumindest der Soll-Wert P_{S} der Leistung P des Heizkeils und/oder der nicht nutzbare Soll-Wertanteil P_{Sv} der Leistung P des Heizkeils (12) und/oder der Soll-Wert ED_{Sn} der Energiedichte von dem Benutzer des Verbindungsautomaten (1) vorgegeben wird.

8. Verfahren nach einem der vorstehenden Ansprüche, **dadurch gekennzeichnet, dass** mindestens bei der Vorwärmung des Heizwiderstandes (16) vor dem eigentlichen Verbindungsvorgang die Temperatur des Heizkeils (12) durch die elektronische Steuerung (10) eingestellt und/oder geregelt wird.

9. Verfahren nach Anspruch 8, **dadurch gekennzeichnet, dass** zur Bestimmung der Temperatur des Heizkeils (12) der temperaturabhängige elektrische Widerstand des Heizwiderstandes (16) gemessen wird.

10. Verfahren nach Anspruch 9, **dadurch gekennzeichnet, dass** der elektrische Widerstand des Heizwiderstandes (16) über eine Messung des Spannungsabfalles an den Elektroden (13, 13') und die Messung des Stromes durch den Heizwiderstand (16) ermittelt wird.

11. Verbindungsautomat (1) zum thermisch induzierten stoffschlüssigen nahtförmigen Verbinden von schweiß- und/oder klebbaren flachen flexiblen Materiallagen miteinander, die als Materialbahn, Materialband und/oder Materialstück ausgebildet und sich zumindest teilweise überdeckend angeordnet sind, mit mindestens einer an einem Tragerahmen (4) des Verbindungsautomaten (1) angeordneten elektrischen Kontaktheizeinrichtung (3) mit einem direkt elektrisch bestromten temperierbaren Heizkeil (12) zum lokalen Erwärmen mindestens einer der zu verbindenden Materiallagen auf eine Verbindungstemperatur und mit mindestens einer an dem Tragerahmen (4) angeordneten elektromotorisch angetriebenen Anpress- und Vorschubrolle (6, 6') zum lokalen Zusammenpressen eines erwärmten Materialbereiches der Materiallagen, wobei eine elektronische Steuerung (10) für die Einstellung und/oder der Regelung der Relativgeschwindigkeit v zwischen den Materiallagen und dem Verbindungsautomaten (1) und der Temperatur T und/oder der elektrischen Leistung P des zwischen zwei Elektroden (13, 13') des Heizkeils (12) angeordneten Heizwiderstandes (16) vorgesehen ist, und wobei der Heizwiderstand (16) von einem gefalteten Stahlblechzuschnitt (17) gebildet ist, dessen Knickstelle (18) eine Heizkeilspitze (19) bildet und dessen parallel zu der Knickstelle (18) verlaufenden Ränder (20, 20') an den Elektroden (13, 13') befestigt sind, wobei die elektronische Steuerung (10) zur Durchführung des Verfahrens nach einem der vorstehenden Ansprüche 1 bis 10 ausgebildet ist.

12. Verbindungsautomat nach Anspruch 11, **dadurch gekennzeichnet, dass** der Stahlblechzuschnitt (17) mäanderförmig geschnittene Windungen aufweist, die sich zwischen den Elektroden (13, 13') erstrecken.

13. Verbindungsautomat nach Anspruch 11 oder 12, **dadurch gekennzeichnet, dass** der Stahlblechzuschnitt (17) eine Dicke zwischen 0,1 mm und 1,0 mm und/oder eine maximale Masse von 50 g aufweist.

14. Verbindungsautomat nach einem der Ansprüche 11 bis 13, **dadurch gekennzeichnet, dass** der Heizwiderstand (16) zumindest in einem vorderen Bereich (21) die gleichen Krümmungsradien wie die mindestens eine Anpress- und Vorschubrolle (6,6') aufweist.

15. Verbindungsautomat nach einem der Ansprüche 11 bis 14, **dadurch gekennzeichnet, dass** die Kontaktheizeinrichtung (3) mit einer einstellbaren Kraft gegen die mindestens eine Anpress- und Vorschubrolle (6, 6') drückt.

## Claims

1. A method for thermally induced seam bonding of weldable and/or gluable flat flexible material layers with each other which are each configured as a material web, a material band and/or a material piece and are arranged at least partially overlapping using an automatic bonding apparatus (1), wherein at least one electrical contact heating arrangement (3) that is arranged at a carrier frame (4) of the automatic bonding apparatus (1) with a directly electrically powered and heatable heating wedge (12) is used for locally heating at least one of the material layers to be bonded to a bonding temperature and at least one contact pressure and feed roller (6, 6') arranged at the carrier frame (4) and driven by an electric motor is used for locally compressing a heated material portion of the at least one material layer, and wherein an electronic control (10) is used for adjusting and/or controlling a relative velocity v between the material layers and the automatic bonding apparatus (1) and a temperature T and/or an electrical power P of a heating resistor (16) arranged between two electrodes (13, 13') of the heating wedge (12), wherein the relative velocity (v) and the temperature (T) and/or the electrical power of the heating wedge (12) is monitored during the bonding process at least in predetermined time intervals, the electrical power (P) of the heating wedge (12) is automatically adjusted upon a change of the relative velocity (v) as a function of a determined relative velocity (v), and wherein the electrical power (P) of the heating wedge (12) is increased upon an increase of the relative velocity (v) and the electrical power (P) is reduced upon a decrease of the relative velocity (v).

2. The method according to claim 1, **characterized in that** a thermal energy that is transmitted from the heating wedge (12) to the material layer to be connected is maintained constant independently from the relative velocity (v).

3. The method according to claims 1 or 2, **characterized in that** the electrical power P of the heating resistor (16) is controlled by the electronic control (10) and an actual value P_{I} of the electrical power P is kept constant relative to a nominal value P_{S} of the electrical power P.

4. The method according to claim 3, **characterized in that** the electrical power P_{I} of the heating resistor (16) is determined by measuring a voltage drop at the two electrodes (13, 13') of the heating wedge (12) and by measuring an electrical current through the heating resistor (16) of the heating wedge (12).

5. The method according to one of the preceding claims 3 through 4, **characterized in that** a nominal value P_{S} of the power P is internally separated by the electronic control (10) into a nominal value portion P_{Sn} that is usable for the bonding process and a nominal value portion P_{Sv} that is not usable for the bonding process.

6. The method according to one of the preceding claims 3 through 5, **characterized in that** the nominal value portion P_{Sn} is internally determined by the electronic control (10) from a nominal value ED_{Sn} of an energy density of the heating wedge (12), the relative velocity v and a width B of the heating wedge (12), wherein the nominal value portion P_{Sn} is a product of the ED_{Sn}, v, and B.

7. The method according to one of the preceding claims 3 through 6, **characterized in that** at least the nominal value P_{S} of the power P of the heating wedge and/or the non-useable nominal value portion P_{Sv} of the power P of the heating wedge (12) and/or the nominal value EDsn of the energy density is predetermined by the user of the automatic bonding apparatus (1).

8. The method according to one of the preceding claims, **characterized in that** the temperature of the heating wedge (12) is adjusted and/or controlled by the electronic control (10) at least during preheating of the heating resistor (16) before an actual bonding process.

9. The method according to claim 8, **characterized in that** a temperature dependent electrical resistance of the electrical resistor (16) is measured in order to determine a temperature of the heating wedge (12).

10. The method according to claim 9, **characterized in that** an electrical resistance of the heating resistor (16) is determined from measuring a voltage drop at the electrodes (13, 13') and from a measuring a current through the heating resistor.

11. An automatic bonding apparatus (1) for thermally induced seam bonding of weldable and/or gluable flat flexible material layers with each other which are each configured as a material web, a material band and/or a material piece and are arranged at least partially overlapping, with at least one electrical contact heating arrangement (3) that is arranged at a carrier frame (4) of the automatic bonding apparatus (1) and includes a directly electrically powered and heatable heating wedge (12) for locally heating at least one of the material layers to be bonded to a bonding temperature, and at least one contact pressure and feed roller (6, 6') arranged at the carrier frame (4) and driven by an electric motor for locally compressing a heated material portion of the material layer, wherein an electronic control (10) is provided for adjusting and/or controlling a relative velocity v between the material layers and the automatic bonding apparatus (1) and a temperature T and/or an electrical power P of a heating resistor (16) arranged between two electrodes (13, 13') of the heating wedge (12), and wherein the heating resistor (16) is formed by a folded steel sheet blank whose kink (18) forms a heating wedge tip (19) and whose edges (20, 20') that extend parallel to the kink are attached at the two electrodes (13, 13'), wherein the electronic control (10) for performing the method is configured according to one of the preceding claims 1 through 10.

12. The automatic bonding apparatus (1) according to claim 11, **characterized in that** the steel sheet blank (17) includes meandering cut windings which extend between the electrodes (13, 13').

13. The automatic bonding apparatus (1) according to claim 11 or 12, **characterized in that** the steel sheet blank (17) has a thickness between 0.1 mm and 1.0 mm and/or a maximum mass of 50 grams.

14. The automatic bonding apparatus (1) according to one of the claims 11 - 13, **characterized in that** the heating resistor (16) has identical radii with the at least one contact pressure and feed roller (6, 6') at least in a front portion (21).

15. The automatic bonding apparatus (1) according to one of the claims 11 - 14, **characterized in that** the contact heating arrangement (3) presses against the at least one contact pressure and feed roller (6, 6') with an adjustable force.

## Revendications

1. Procédé pour l'assemblage par liaison de matière induit thermiquement, en forme de joint, de couches de matériau flexibles plates pouvant être soudées et/ou collées entre elles, qui sont réalisées sous la forme d'une nappe de matériau, d'une bande de matériau et/ou d'une pièce de matériau et sont disposées en recouvrement au moins partiel l'une par rapport à l'autre, au moyen d'un automate de soudage (1), dans lequel au moins un dispositif de chauffage électrique par contact (3) disposé sur un cadre de support (4) de l'automate de soudage (1) et comportant un coin chauffant (12) thermorégulable directement alimenté électriquement est utilisé pour chauffer localement au moins une des couches de matériau à assembler à une température d'assemblage et au moins un rouleau de pression et d'avance (6, 6') entraîné par moteur électrique et disposé sur le cadre de support (4) est utilisé pour comprimer localement une zone de matériau chauffée de la couche de matériau, et dans lequel une commande électronique (10) est utilisée pour le réglage et/ou la régulation de la vitesse relative v entre les couches de matériau et l'automate de soudage (1) et de la température T et/ou de la puissance électrique P de la résistance chauffante (16) disposée entre deux électrodes (13, 13') du coin chauffant (12), la vitesse relative v et la température T et/ou la puissance électrique P du coin chauffant (12) étant surveillées au moins à des intervalles de temps prédéfinis pendant le processus d'assemblage et la puissance électrique P du coin chauffant (12) étant automatiquement réajustée en fonction de la vitesse relative v déterminée en cas de variation constatée de la vitesse relative v, sa puissance électrique P étant accrue en cas d'augmentation de la vitesse relative v et sa puissance électrique P étant réduite en cas de diminution de la vitesse relative v.

2. Procédé selon la revendication 1, **caractérisé en ce que** l'énergie thermique transmise par le coin chauffant (12) à la couche de matériau à assembler est maintenue constante indépendamment de la vitesse relative v.

3. Procédé selon la revendication 1 ou 2, **caractérisé en ce que** la puissance électrique P de la résistance chauffante (16) est régulée par la commande électronique (10) et une valeur réelle P_{I} de la puissance P est maintenue constante par rapport à une valeur de consigne P_{S} de la puissance P.

4. Procédé selon la revendication 3, **caractérisé en ce que** la puissance électrique P_{I} de la résistance chauffante (16) est déterminée par une mesure de la chute de tension aux électrodes (13, 13') du coin chauffant (12) et la mesure du courant à travers la résistance chauffante (16) du coin chauffant.

5. Procédé selon l'une des revendications 3 à 4 précédentes, **caractérisé en ce que** la valeur de consigne Ps de la puissance P est divisée de façon interne par la commande électronique (10) en une part de valeur de consigne P_{Sn} utilisable pour le processus d'assemblage et une part de valeur de consigne P_{Sv} non utilisable pour le processus d'assemblage.

6. Procédé selon l'une des revendications 3 à 5 précédentes, **caractérisé en ce que** la part de valeur de consigne P_{Sn} est déterminée de façon interne par la commande électronique (10) à partir d'une valeur de consigne ED_{Sn} de la densité énergétique du coin chauffant (12), de la vitesse relative v et de la largeur B du coin chauffant (12), la part de valeur de consigne P_{Sn} résultant du produit de ED_{Sn}, v et B.

7. Procédé selon l'une des revendications 3 à 6 précédentes, **caractérisé en ce qu'**au moins la valeur de consigne P_{S} de la puissance P du coin chauffant et/ou la part de valeur de consigne P_{Sv} non utilisable de la puissance P du coin chauffant (12) et/ou la valeur de consigne ED_{Sn} de la densité énergétique sont prédéfinies par l'utilisateur de l'automate de soudage (1).

8. Procédé selon l'une des revendications précédentes, **caractérisé en ce que**, au moins pendant le préchauffage de la résistance chauffante (16) avant le processus d'assemblage proprement dit, la température du coin chauffant (12) est réglée et/ou régulée par la commande électronique (10).

9. Procédé selon la revendication 8, **caractérisé en ce que**, pour déterminer la température du coin chauffant (12), on mesure la résistance électrique de la résistance chauffante (16) en fonction de la température.

10. Procédé selon la revendication 9, **caractérisé en ce que** la résistance électrique de la résistance chauffante (16) est déterminée par une mesure de la chute de tension aux électrodes (13, 13') et la mesure du courant à travers la résistance chauffante (16).

11. Automate de soudage (1) pour l'assemblage par liaison de matière induit thermiquement, en forme de joint, de couches de matériau flexibles plates pouvant être soudées et/ou collées entre elles, qui sont réalisées sous la forme d'une nappe de matériau, d'une bande de matériau et/ou d'une pièce de matériau et sont disposées en recouvrement au moins partiel, avec au moins un dispositif de chauffage électrique par contact (3) disposé sur un cadre de support (4) de l'automate de soudage (1), qui comporte un coin chauffant (12) thermorégulable directement alimenté électriquement, pour chauffer localement au moins une des couches de matériau à assembler à une température d'assemblage et avec au moins un rouleau de pression et d'avance (6, 6') entraîné par moteur électriquement, disposé sur le cadre de support (4) pour comprimer localement une zone de matériau chauffée des couches de matériau, dans lequel une commande électronique (10) est prévue pour régler et/ou réguler la vitesse relative v entre les couches de matériau et l'automate de soudage (1) et la température T et/ou la puissance électrique P de la résistance chauffante (16) disposée entre deux électrodes (13, 13') du coin chauffant (12), et dans lequel la résistance chauffante (16) est formée par une découpe de tôle d'acier pliée (17) dont la pliure (18) forme une pointe de coin chauffant (19) et dont les bords (20, 20') s'étendant parallèlement à la pliure (18) sont fixés aux électrodes (13, 13'), la commande électronique (10) étant conçue pour mettre en oeuvre le procédé selon l'une des revendications 1 à 10 précédentes.

12. Automate de soudage selon la revendication 11, **caractérisé en ce que** la découpe de tôle d'acier (17) présente des spires coupées en méandres qui s'étendent entre les électrodes (13, 13').

13. Automate de soudage selon la revendication 11 ou 12, **caractérisé en ce que** la découpe de tôle d'acier (17) présente une épaisseur comprise entre 0,1 mm et 1,0 mm et/ou une masse maximale de 50 g.

14. Automate de soudage selon l'une des revendications 11 à 13, **caractérisé en ce que** la résistance chauffante (16) présente, au moins dans une zone avant (21), les mêmes rayons de courbure que ledit au moins un rouleau de pression et d'avance (6, 6').

15. Automate de soudage selon l'une des revendications 11 à 14, **caractérisé en ce que** le dispositif de chauffage par contact (3) fait pression avec une force réglable sur ledit au moins un rouleau de pression et d'avance (6, 6').
